(19) **Europäisches Patentamt**
**European Patent Office**
**Office européen des brevets**

(11) **EP 2 265 407 B1**

(12) **EUROPEAN PATENT SPECIFICATION**

(45) Date of publication and mention
of the grant of the patent:
**16.05.2012 Bulletin 2012/20**

(51) Int Cl.:
**B23K 26/03** (2006.01)  **H01S 3/00** (2006.01)

(21) Application number: **09718580.5**

(22) Date of filing: **09.03.2009**

(86) International application number:
**PCT/GB2009/000633**

(87) International publication number:
**WO 2009/112815 (17.09.2009 Gazette 2009/38)**

(54) **PROCESS MONITORING**

PROZESSÜBERWACHUNG

SURVEILLANCE DE PROCESSUS

(84) Designated Contracting States:
**AT BE BG CH CY CZ DE DK EE ES FI FR GB GR
HR HU IE IS IT LI LT LU LV MC MK MT NL NO PL
PT RO SE SI SK TR**

(30) Priority: **13.03.2008 GB 0804657**

(43) Date of publication of application:
**29.12.2010 Bulletin 2010/52**

(73) Proprietor: **GSI Group Limited
Swift Valley
Rugby
Warwickshire CV21 1QN (GB)**

(72) Inventors:
• **KEEN, Stephen
Warwickshire CV33 9SH (GB)**

• **LEWIS, Steffan
Berkshire RG6 1NL (GB)**

(74) Representative: **Kensett, John Hinton
Saunders & Dolleymore LLP
9 Rickmansworth Road
Watford
Hertfordshire WD18 0JU (GB)**

(56) References cited:
**EP-A- 0 507 483        WO-A-89/11743
WO-A-2007/148127    DE-A1- 4 140 182
US-A- 4 641 650       US-A- 4 785 806
US-A- 4 865 683       US-A- 5 026 979
US-A- 5 219 345       US-A1- 2006 013 532
US-A1- 2006 165 343  US-B1- 6 670 574**

**Description**

This invention relates to process monitoring. In particular, it relates to process monitoring for a process done by a fibre laser.

Optical fibre lasers are very convenient for various types of material processing.

Lasers are used for processing materials for a wide range of applications such as welding, cutting and surface modification. For all these processes, the interaction of the laser light with the material will vary depending on a wide range of parameters such as intensity, shield gas parameters, velocity of the workpiece relative to the beam, and so on. As the light couples into the material, the ratio of light absorbed and reflected will change. Also, for some processes, a spectrum of shorter wavelengths will be generated as plasma is formed. The characteristics of this light can be used to control a process, as described in US-A-4865683 or US-A-6670574. All the methods used in these documents use external means for capturing light from the process and analysing it.

External devices for capturing radiation add complexity and extra space requirements, amongst other problems. Integration into the fibre laser reduces component count, is simpler to implement and centralises the laser and process control resulting in a more cost effective control system compared to one based around bulk optic monitoring of the back-reflected signal.

The invention is defined by the independent claims.

According to the present invention in a first aspect there is provided a fibre laser adapted to capture back-reflected light for enabling the back-reflected light to be analysed to control or monitor an operation performed with the fibre laser

Preferably, the fibre is a double clad fibre and the means comprises a portion of the fibre having an outer low index coating stripped away and means for capturing back-reflected light which would have been in the outer cladding layer.

The stripped portion of the fibre may be potted in a relatively high index material. This may, for example, be Norland, refractive index 1.56. Preferably, the fibre is stripped over a distance of a few millimetres.

Any suitable opto-electronic device, for example a photodiode, may be used to monitor the stripped out radiation.

The stripped part of the fibre laser may be a delivery fibre. This may be done anywhere but, advantageously, the stripped portion may be formed in the vicinity of a splice point in the fibre.

Where the stripped portion is formed in the vicinity of a splice point, a means may be provided for isolating light scattered by the splice point itself. This may comprise a component having two portals, one portal being formed or positioned to capture scattered light from the splice position and the other portal being spaced a distance away from the first portal, whereby only light captured by the second portal is used for monitoring.

In a further aspect, the invention provides a method of controlling a process done by a fibre laser on a workpiece, comprising using back-reflection from the workpiece to monitor the process.

In a further aspect, there is provided a device for enabling back-reflection from a workpiece acted upon by a fibre laser to be isolated from radiation emitted from a splice point, comprising a body having two portals, spatially separated from one another.

Embodiments of the invention will now be described, by way of example only, with reference to the accompanying schematic drawings in which:

Figure 1 shows a fibre laser system for processing a workpiece;
Figure 1(a) shows a cross-section through a delivery fibre;
Figure 2 shows part of an embodiment of the invention;
Figures 3 and 4 show back-reflected signals;
Figure 5 shows a light stripping means;
Figures 6 and 7 show monitored radiation;
Figures 8 and 9 show back-reflected signals;
Figure 10 shows an alternative light-stripping means; and
Figure 11 shows schematic visible light detection.

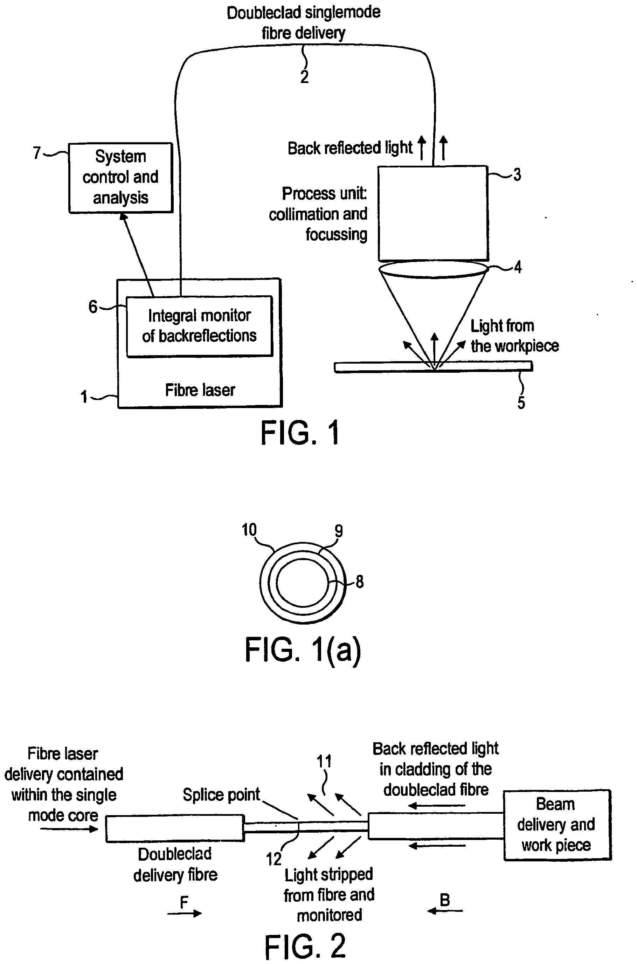

Figure 1 shows schematically a material processing apparatus using a fibre laser. A fibre laser 1 is used to generate a laser beam in well known manner. A typical fibre laser includes means for emitting pumping radiation (light) from pumping laser diode through a cladding layer to a core layer and diffraction gratings being formed to act as the resonant cavity. The laser beam emitted from the fibre laser is applied via a double clad single mode delivery fibre 2 to a processing unit 3 which generally includes optics for collimation and focusing of the laser beam. The laser beam is then focused through a lens arrangement 4 to a workpiece 5 where it is used for processing the workpiece. This processing may typically include cutting, welding, surface modification or other processing steps.

For all of these types of processes, the interaction of the light with the material varies depending on a wide range of parameters as discussed. As discussed, the back-reflected radiation from the workpiece is, in embodiments of the invention, used to control the process.

Figure 1 includes schematically, as part of the fibre laser, an integral monitor 6 of back-reflection. Back-reflection from this integral monitor is applied to a system control and analysis device 7.

In the device of Figure 1, the fibre laser output is delivered via a double clad singlemode delivery fibre 2 which may, for instance, have a core diameter of 10 micrometres and a first cladding diameter of 200 $\mu$m having numerical apertures of 0.08 and 0.46 respectively.

Back-reflection at the laser wavelength is caused by reflection from the surface of the workpiece that the laser output is focused onto. Back-reflections at other wavelengths can be generated by the plasma formed from interaction of the beam with the workpiece. A portion of this back-reflection is collected back into the imaging optics and transmitted back into the first cladding of the delivery fibre. This back-reflection propagates in the first cladding of the delivery fibre back into the laser.

Many different schemes may be used for extracting the back-reflected (ie feedback) radiation from the cladding of the delivery fibre and using this to monitor the material processing operations.

As shown in Figure 1a, the single mode delivery fibre 2 comprises a core 8, a first cladding layer 9 and an outer cladding layer 10. The laser output is transmitted to the workpiece in the core 8. A significant proportion of the back-reflected light propagates in the first cladding 9 guided by the outer cladding 10 which has a lower refractive index.

In a first example shown in Figure 2, the reflected signal captured by the delivery fibre can be extracted from the 10/200 $\mu$m fibre by stripping the fibre of its outer low index coating and then potting this area in a high index material. The high index material may, for example, be Norland optical adhesive having a refractive index of 1.56. In preferred embodiments, the guided light in the multimode cladding of the delivery fibre is stripped out over a distance of a few millimetres but this may vary. The stripped light is then monitored by any convenient monitoring device. This may typically be any opto electronic device such as a photodiode.

This outer cladding is most preferably partially stripped somewhere in an unbroken length of the delivery fibre away from any splice points: this arrangement maximises the discrimination between the forward-going light emitted by the laser and the back-reflected light in the cladding. However, it may be preferable to locate the stripped section in the vicinity of a splice point for ease of construction of the laser: in this case means for discriminating between forward-going light scattered from the core at the splice point and back-reflected light in the cladding must be provided. Figure 2 is an example of the latter, where the splice is located in the stripped region 11 of the double clad single mode delivery fibre, where the outer cladding layer 10 is stripped away. This enables the back-reflected light which was in the first cladding layer to be detected by a suitable opto electronic device and used for monitoring the process.

As mentioned above, in an embodiment where the outer cladding layer is stripped in the vicinity of a splice point, it is most preferable that discrimination is made between the forward signal arising from scatter of the splice 12 itself and the reverse cladding mode. This is because inevitably at a splice point, some of the desired laser signal travelling in the forward direction F will be scattered at the splice point and this is not the radiation that it is desired to monitor. The desired radiation will be the radiation moving in the backwards direction B.

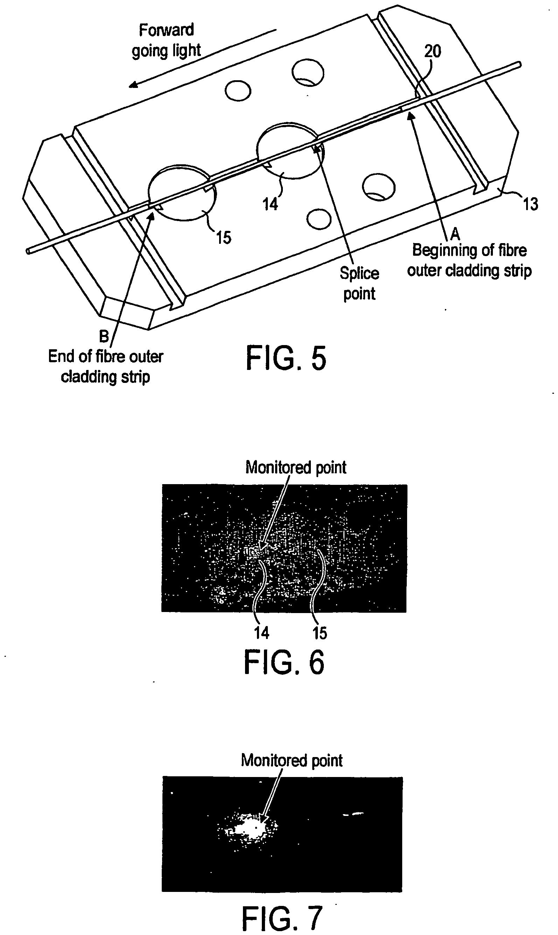

Therefore, in embodiments of the invention in which the outer cladding is stripped around a splice point, a discriminator is most preferably used. Figure 5 shows one example of a discriminator. This comprises a component 13 that is placed in the vicinity of the splice point and stripped portion of the fibre and which comprises two spatially displaced portals 14 and 15. It is positioned with respect to the stripped portion of the fibre so that the portal 14 overlies the splice point 12. The portion 15 lies a distance away from that (typically nearer the workpiece/beam delivery end). In a typical embodiment, the distance between the centres of the portal is around 13mm and the radius of each portal is around 7mm. The fibre is potted within this component. The portals are generally circular in the embodiment shown. They may be elliptical, or any other shape.

The device 13 has a longitudinal groove 20 into which the optical delivery fibre, including the stripped portion, is located (potted). The stripped portion of the fibre has between A and B in the figure, with portal 14 overlying a splice point and portal 15 spaced apart from this.

A light detector, such as one or more photodiodes or other opto electronic means, is arranged to detect light contained by the portal 15 which is spaced from the splice.

The portal 14 serves to contain any light which is scattered at the splice position itself (which will be mainly laser radiation and not the back-reflection which it is intended to monitor) and this is therefore isolated from the monitor point.

Other means of spatially isolating the desired from the undesired radiation in the vicinity of the stripped portion of the fibre may be used. Effectively, any means which spatially isolates the scatter from forward going and reverse radiation may be used. Typically, this may result in a greater sensitivity for the monitor photodiode of at least 10:1.

The back-reflected light which is monitored may be used for many different purposes. Methods for monitoring radiation per se are well known and any convenient method may be used for detecting and using this information to monitor a material processing operation, perhaps in a feedback loop.

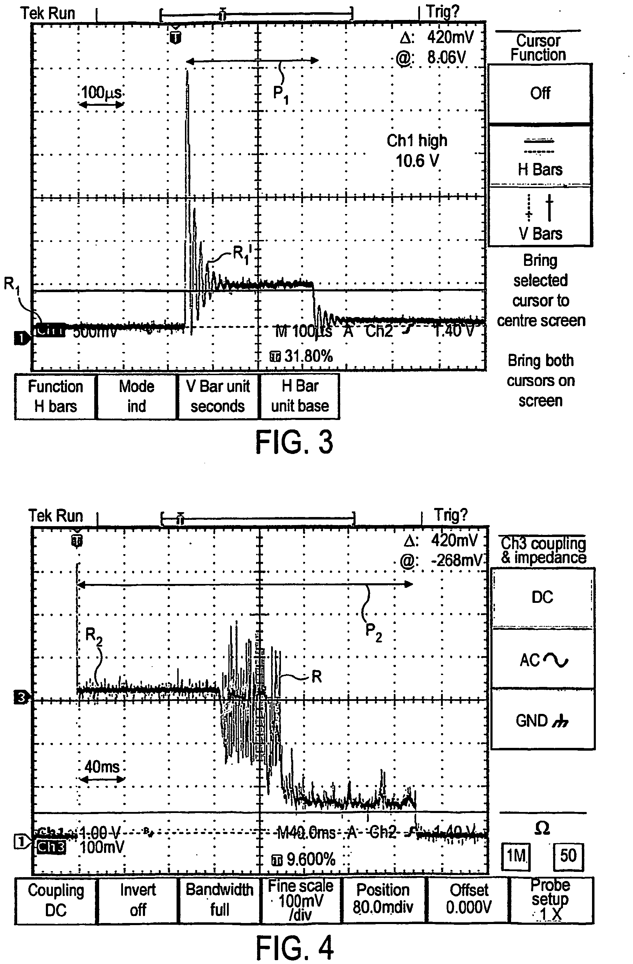

The back-reflected light detected in embodiments of the present invention can act as a very sensitive indicator of the state of a material process. Figures 3 and 4 show monitored signals of the back-reflection signal as monitored with a photodiode when processing a stainless steel workpiece. The signals $R_1$ and $R_2$ shown on the respective Figures 3 and 4 show the back-reflection signal taken from the stripped multimode fibre. Figure 3 shows a typical signal that will be achieved when a laser is properly focused upon a workpiece. The scale here is 1 graduation = 100 $\mu$s. An excitation pulse $P_1$ is applied.

There is a very small amount of back-reflection $R_1'$, last-

ing a few microseconds, before the light couples in. After this, the back-reflection reverts to a background level which is due to Fresnel reflection from the end face of the fibre delivery and is unavoidable.

Figure 4 shows a scenario where the material is placed out of focus. Note that the scale of this plot is different (1 graduation - 40 ms). In this case, it takes a much longer time for the light to couple into the material. In this case, with an excitation pulse $P_2$, there is an elevated signal R for a period of about 120 microseconds which then collapses as the light couples in.

Figures 6 and 7 show how a device like that of Figure 5 can be used. The figures show the discrimination device 13. Figure 6 shows monitored radiation (in this case measured thermally). Figure 7 shows an enhanced signal at portal 14 due to back-reflection.

There are many further types of analysis and monitoring that can be achieved using embodiments of the present invention. Spectral filtering or analysis may be used at the monitor to gain further information about a process. Thus, by using spectral filtering with the photo diode or other device light of a particular wavelength, or range of wavelengths, can be monitored. Alternatively, or additionally, light of a particular wavelength or value can on the other hand be excluded by filtering. To achieve this filtering, a suitable filter is applied to the photodiode, or its output.

The waveforms of figures 3 and 4 show that for any processing operation there will be a key 'signature' waveform generated by the back-reflection monitor which will indicate the health of the process. This signature can be used as a sensitive control signal in a production line to maximise quality and yield. Additionally a library of typical signature waveforms for different process regimes can be used as a guide for users of the processing system.

In further embodiments, the system can be used to protect a laser from undue back-reflection. That is, instead of being used to monitor a process, the stripping of the outer cladding layer can serve to remove undesired back-reflected radiation which might otherwise find its way into the laser itself and possibly damage or affect the operation of the laser.

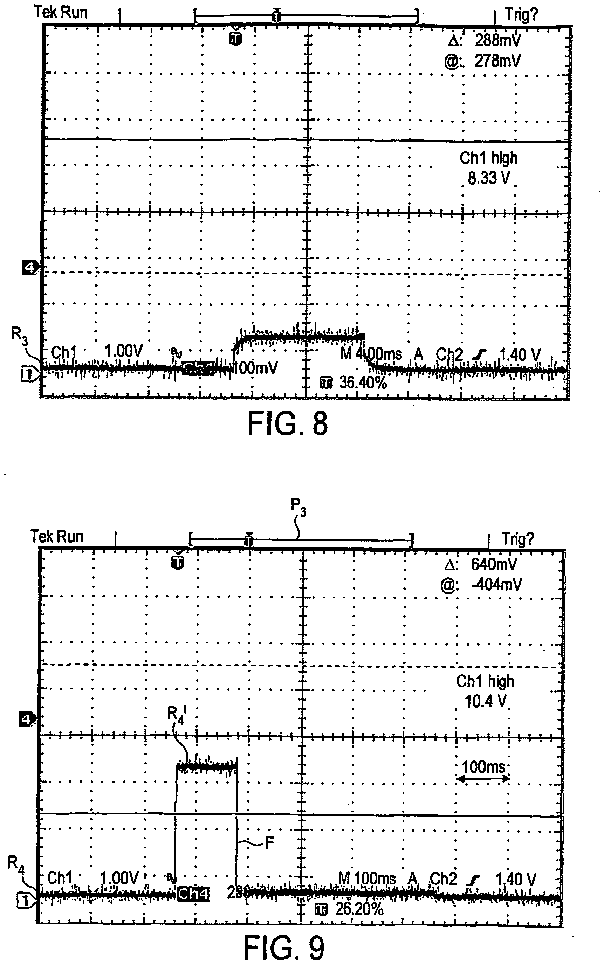

Furthermore, embodiments of the invention can be used to protect a laser from failure of the delivery fibre and burn back. Under normal laser operation, there is inevitably a background signal from the device which arises due to back-reflection of an end cap of the delivery fibre. This is inevitable and generally about 4% of radiation is back-reflected in this way. If the delivery fibre fails for any reason, then this signal falls back to zero. This fall to zero can be detected by monitoring back-reflected radiation and can be used to take appropriate action, such as turning off the laser or other action to protect the laser or its environment or operators. Figures 8 and 9 illustrate this. In the figures, respective traces $R_3$ and $R_4$ represent the signal received at a monitor from the.device. The signal R3 in Figure 8 is a reference signal which is solely due to back-reflected light of the uncoated end face of the fibre. Figure 9 shows a signal obtained when the fibre fails when experiencing a large amount of feedback. In this case, the laser is excited with a 500 millisecond pulse $P_3$, has an initial rise $R_4{}^1$, then fails after about 100 milliseconds. This is seen because the signal goes to near zero at this failure point F. This zero signal can be compared with a demand signal and if necessary used to twitch the system off or take other action to prevent damage.

The light which is monitored may be back-reflected infrared light from a workpiece, producing a signal that can be used for protection, process monitoring or other uses.

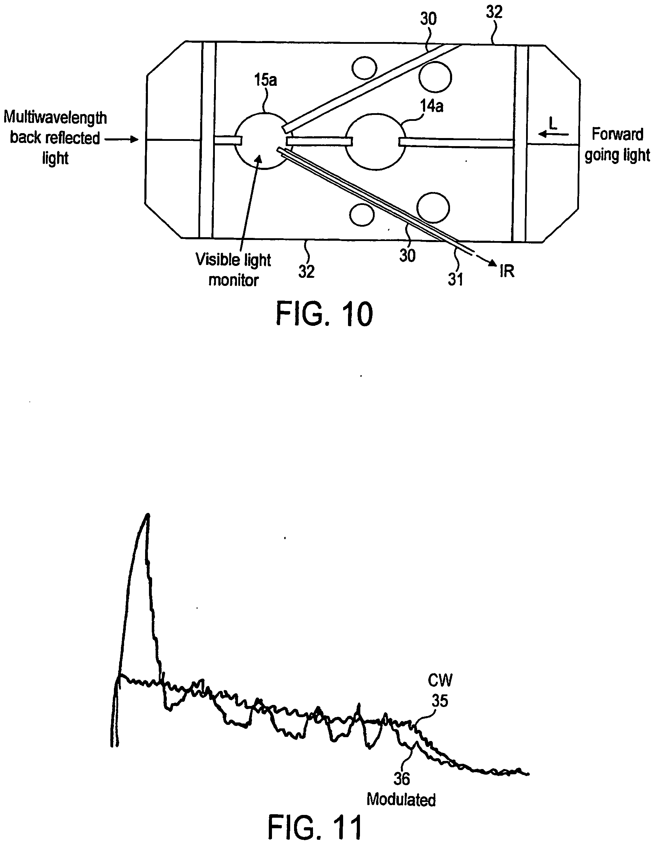

It has been found that by using appropriate filtering and selection of photodiodes, or other photo-detectors, the visible light generated at the workpiece can be monitored. This can give a different or greater insight into light interaction with the material being processed. In order to achieve adequate sensitivity to visible light collected by the delivery fibre, it is useful for the photodiode operating in the visible spectrum to collect all the light at the back-reflection port of the light-stripping device. Figure 10 shows an embodiment of this device which enables this.

Referring to Figure 10, a device similar to that of Figure 5 is shown which has some additional features. In this, in addition to the ports 14A and 15A (equivalent to ports 14 and 15 on Figure 5), one or more grooves 30 are formed in the device for receiving an optical fibre 31. The grooves are formed from port 15A to one or both side walls 32 of the device. They may preferably be formed at an acute angle to the longitudinal axis L of the device. An optical fibre mounted within at least one of the grooves, such as fibre 31, is arranged to pick up infrared light from port 15A. Visible light is detected by a suitable visible photo-detector at port 15A.

In this embodiment, the additional monitor fibres 31 are adapted to collect a portion of the back-reflected light from the workpiece, via the port 15A. It is found that the infrared signal collected by these is still sufficiently strong to allow monitoring with a photodiode positioned at the output end of the fibre 31. The monitoring fibres are typically multimode large area fibres, dimension 220/240 for example, with a 0.22 NA glass cladding and a core size in the range of 200 $\mu$m to 1 mm. This then collects the IR light and leaves the back-reflection port 15A free to place a large area photodiode over the port with its spectral response optimised for detection of light in the visible part of the spectrum.

Visible light can be used to detect and monitor several features different to those which can be monitored by infrared light. Figure 11 shows visible light detected during material processing operations in two different modes, CW (continuous wave) and modulated. They show typical kinds of results that might be achieved when a 200 watt fibre laser is focused onto a 1 mm thick stainless steel plate. A first waveform 35 is when the fibre laser is operated at CW and the second waveform 36 when the laser is modulated at 20 kHz, 25 micro seconds 200 watt peak demand. The waveforms are of detected visible light but are schematic only. It is seen that the light detected from CW operation 35 is at a generally constant level. Modulated operation however produces detective visible light 36 which has a short burst of visible light and which then decays to near zero.

In practice, using operation modes as above on 1 mm stainless steel, it has been found that a modulated waveform produced a clean hole through the metal place, whereas a CW signal formed a large melt on the surface. This different operation is due to different ways the light interacts with the surface.

Detection of the visible signal can clearly differentiate between these two regimes and is a very useful tool for process monitoring in material processing applications.

It is found that a single mode optical fibre often generates an intense white light when it fails during operation. In embodiments of the invention, this intense white light may be monitored for and can be used to trigger a shutdown to protect the laser.

An advantage of the present invention is that since monitoring can be done anywhere on the delivery fibre, this may be remote, even far remote, from the workpiece. A delivery fibre can be tens of meters long so monitoring can be done anywhere along it. This enables easier process monitoring.

**Claims**

1. A fibre laser adapted to extract back-reflected light for enabling the back-reflected light to be analysed to control or monitor an operation performed with the fibre laser, wherein an optical delivery fibre (20) comprises a stripped portion in the vicinity of a splice point, **characterized in that** it further comprises a device having at least two spatially isolated portals (14, 15), the device being located in the vicinity of the stripped portion and suitable for isolating radiation emitted at the splice point from back-reflected radiation.

2. A fibre laser as claimed in Claim 1, including a double-clad delivery fibre having a core and at least two cladding layers, wherein an outer cladding layer is stripped away from a portion of the delivery fibre to thereby enable back-reflection to be removed for monitoring.

3. A fibre laser as claimed in any preceding claim, including a medium suitably positioned and of suitable reflective index, to couple back-reflection out of the fibre.

4. A fibre laser as claimed in Claim 5m, wherein the medium is of a high index provided in the vicinity of a stripped portion of the fibre to remove back radiation from the stripped portion.

5. A fibre laser as claimed in Claim 1, wherein the device comprises a body having two spatially separated portals.

6. A fibre laser as claimed in Claim 5, wherein the centres of the portals are spatially separated by around 13 millimetres.

7. A fibre laser as claimed in Claim 5 or Claim 6, wherein each portal has a radius of around 7 millimetres.

8. A fibre laser as claimed in any preceding claim, wherein the back-reflected light is captured at a position remote from a workpiece.

9. A fibre laser as claimed in any preceding claim, including spectral filtering of the monitored back-reflection.

10. A fibre laser as claimed in any preceding claim, including means for separately collecting visible and IR radiation.

11. A method of controlling a process done on a work piece, by a fibre laser as claimed in claim 1, comprising detecting back-reflected radiation from a portal and using the detected back-reflection from the workpiece to monitor the process.

12. A method as claimed in Claim 11 wherein the back-reflection is monitored at a portion of a delivery fibre having at least one cladding area stripped away.

13. A method as claimed in Claim 11 or 12, including analysing for signature waveforms indicating the health of a process.

14. A method as claimed in any of Claims 11 to 13, including guiding IR radiation away from the portal, and detecting visible radiation at the portal.

15. A method as claimed in Claim 14, including detecting the guided IR radiation.

**Patentansprüche**

1. Glasfaserlaser, ausgelegt zum Extrahieren von Rückstrahllicht, um die Analyse des Rückstrahllichtes zur Steuerung oder Überwachung eines mit dem Glasfaserlaser ausgeführten Arbeitsvorgangs zu ermöglichen, wobei eine zuführende Lichtleitfaser (20) ein abisolierten Partie in der Nähe eines Spleißpunktes aufweist, **dadurch gekennzeichnet, dass** sie weiter eine Vorrichtung mit mindestens zwei räumlich getrennten Portalen (14, 15) umfasst, wobei die Vorrichtung in der Nähe der abisolierten Partie angeordnet und zum Abtrennen von am Spleißpunkt von der Rückstrahlung abgegebener Strahlung geeignet ist.

2. Glasfaserlaser nach Anspruch 1, umfassend eine doppelt ummantelte Zuführfaser mit einem Kern und mindestens zwei Mantelschichten, wobei eine äußere Mantelschicht von einer Partie der Zuführfaser entfernt wird, um auf diese Weise das Enziehen der Rückstrahlung zur Überwachung zu ermöglichen.

3. Glasfaserlaser nach einem der vorhergehenden Ansprüche, umfassend ein an geeigneter Stelle angeordnetes und einen geeigneten Reflexionsindex aufweisendes Medium zum Auskuppeln der Rückstrahlung aus der Faser.

4. Glasfaserlaser nach Anspruch 5m, wobei das Medium in der Nähe einer abisiolierten Partie der Faser zum Entziehen der Rückstrahlung aus der abisolierten Partie einen hohen Index aufweist.

5. Glasfaserlaser nach Anspruch 1, wobei die Vorrichtung einen Körper mit zwei räumlich getrennten Portalen aufweist.

6. Glasfaserlaser nach Anspruch 5, wobei die Zentren der Portale räumlich um ungefähr 13 Millimeter voneinander getrennt sind.

7. Glasfaserlaser nach Anspruch 5 oder 6, wobei die Portale jeweils einen Radius von ungefähr 7 Millimetern aufweisen.

8. Glasfaserlaser nach einem der vorhergehenden Ansprüche, wobei das Rückstrahllicht an einer von einem Werkstück abgewandten Stelle eingefangen wird.

9. Glasfaserlaser nach einem der vorhergehenden Ansprüche, umfassend die spektrale Filterung der überwachten Rückstrahlung.

10. Glasfaserlaser nach einem der vorhergehenden Ansprüche, umfassend Mittel zum separaten Auffangen von sichtbarer und IR-Strahlung.

11. Verfahren zum Steuern eines an einem Werkstück ausgeführten Arbeitsvorgangs mittels eines Glasfaserlasers nach Anspruch 1, umfassend das Erfassen von Rückstrahlung aus einem Portal und den Einsatz der erfassten Rückstrahlung vom Werkstück zur Überwachung des Arbeitsvorgangs.

12. Verfahren nach Anspruch 11, wobei die Rückstrahlung an einer Partie der Zuführfaser überwacht wird, wo mindestens ein Mantelbereich entfernt wurde.

13. Verfahren nach Anspruch 11 oder 12, umfassend eine Analyse von den Zustand des Arbeitsvorgangs anzeigenden Kennwellenformen.

14. Verfahren nach einem der Ansprüche 11 bis 13, umfassend das Wegführen von IR-Strahlung aus dem Portal und das Erfassen von sichtbarer Strahlung am Portal.

15. Verfahren nach Anspruch 14, umfassend das Erfassen der geführten IR-Strahlung.

## Revendications

1. Laser à fibre adapté pour extraire une lumière rétro-réfléchie pour permettre à cette lumière rétro-réfléchie d'être analysée afin de commander ou de surveiller une opération effectuée avec le laser à fibre, dans lequel une fibre optique d'amenée (20) comprend une partie dénudée à proximité d'un point d'épissure, **caractérisé en ce qu'**il comprend en outre un dispositif ayant au moins deux portails isolés spatialement (14, 15), ce dispositif étant situé à proximité de la partie dénudée et étant approprié pour isoler le rayonnement émis au point d'épissure provenant du rayonnement rétro-réfléchi.

2. Laser à fibre selon la revendication 1, comprenant une fibre d'amenée à double gaine ayant un coeur et au moins deux couches de gaine, une couche de gaine extérieure étant enlevée d'une partie de la fibre d'amenée pour permettre ainsi à la rétro-réflexion d'être supprimée pour la surveillance.

3. Laser à fibre selon l'une quelconque des revendications précédentes, comprenant un milieu positionné de manière appropriée et ayant un indice de réflexion approprié pour coupler la rétro-réflexion hors de la fibre.

4. Laser à fibre selon la revendication 5, dans lequel le milieu est d'un indice élevé prévu à proximité d'une partie dénudée de la fibre pour supprimer le rayonnement arrière provenant de la partie dénudée.

5. Laser à fibre selon la revendication 1, dans lequel le dispositif comprend un corps ayant deux portails séparés spatialement.

6. Laser à fibre selon la revendication 5, dans lequel les centres des portails sont séparés spatialement d'environ 13 millimètres.

**7.** Laser à fibre selon la revendication 5 ou la revendication 6, dans lequel
chaque portail a un rayon d'environ 7 millimètres.

**8.** Laser à fibre selon l'une quelconque des revendications précédentes, dans lequel la lumière rétro-réfléchie est capturée dans une position éloignée d'une pièce à travailler.

**9.** Laser à fibre selon l'une quelconque des revendications précédentes, comprenant un filtrage spectral de la rétro-réflexion surveillée.

**10.** Laser à fibre selon l'une quelconque des revendications précédentes, comprenant un moyen pour recueillir séparément le rayonnement visible et le rayonnement infrarouge.

**11.** Procédé de commande d'un processus effectué sur une pièce à travailler, par un laser à fibre selon la revendication 1, comprenant :

la détection du rayonnement rétro-réfléchi venant d'un portail et l'utilisation de la rétro-réflexion détectée provenant de la pièce à travailler pour surveiller le processus.

**12.** Procédé selon la revendication 11, dans lequel la rétro-réflexion est surveillée à l'endroit d'une partie d'une fibre d'amenée ayant au moins une partie de la gaine enlevée.

**13.** Procédé selon la revendication 11 ou la revendication 12, comprenant l'analyse pour trouver des formes d'onde de signature indiquant la santé d'un processus.

**14.** Procédé selon l'une quelconque des revendications 11 à 13, comprenant le guidage du rayonnement infrarouge pour l'écarter du portail, et la détection du rayonnement visible au portail.

**15.** Procédé selon la revendication 14, comprenant la détection du rayonnement infrarouge guidé.

Doubleclad singlemode
fibre delivery

2

7 ⌐ System
control and
analysis

Back reflected light ↑ ↑

Process unit:
collimation and
focussing

3

6 ⌐ Integral monitor
of backreflections

4

1 ⌐ Fibre laser

Light from
the workpiece

5

## FIG. 1

10    9

8

## FIG. 1(a)

Fibre laser
delivery contained
within the single
mode core

Back reflected light
in cladding of the
doubleclad fibre

11

Splice point

Beam
delivery and
work piece

Doubleclad
delivery fibre

12

Light stripped
from fibre and
monitored

F →

← B

## FIG. 2

EP 2 265 407 B1

FIG. 3

FIG. 4

**FIG. 5**

Forward going light

20

13

A
Beginning of fibre outer cladding strip

Splice point

14

15

B
End of fibre outer cladding strip

Monitored point

14    15

**FIG. 6**

Monitored point

**FIG. 7**

FIG. 8

FIG. 9

EP 2 265 407 B1

FIG. 10

FIG. 11

12

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4865683 A
- US 6670574 A